# EUROPEAN PATENT APPLICATION

(11) **EP 3 979 102 A1**
(43) Date of publication of application: **06.04.2022**
(21) Application number: 20199393.8
(22) Date of filing: 30.09.2020
(51) Int. Cl.: G06F 21/30, H04L 9/32, H04L 29/06, H04W 12/06

(54) **ELECTRONIC DEVICE FOR PERFORMING AN AUTHENTICATION OPERATION**

(71) Applicant: Rubean AG, 81379 München (DE)
(72) Inventor: PEIN, Henrik, 25421 Pinneberg (DE)
(74) Representative: Patentship Patentanwaltsgesellschaft mbH

(57) **Abstract**

An electronic device (100) is disclosed for performing an authentication operation by a user on the basis of a virtual PIN pad, wherein the virtual PIN pad comprises a plurality of graphical symbols. The electronic device (100) comprises a touch display (101) configured to sequentially display a plurality of image frames, including a first image frame and a second image frame. The first image frame, for each of the plurality of graphical symbols of the virtual PIN pad, comprises only a first portion of the respective graphical symbol of the virtual PIN pad. The second image frame, for one or more of the plurality of graphical symbols of the virtual PIN pad, comprises only a second portion different to the first portion of the respective graphical symbol of the virtual PIN pad. The touch display (101) is further configured to generate, in response to a touch operation of the touch display (101) by the user, a touch detection signal. Moreover, the electronic device (100) comprises a processing circuitry (103) configured to associate the touch detection signal with one of the plurality of graphical symbols for performing the authentication operation.

## Description

### TECHNICAL FIELD

The invention relates to secure electronic transactions. More specifically, the invention relates to an electronic device, in particular a mobile electronic communication device for performing a secure authentication operation using a virtual PIN pad.

### BACKGROUND OF THE INVENTION

More and more electronic transactions can be performed using a mobile electronic communication device, such as a smart phone. In order to increase the security of such electronic transactions often a successful authentication by a user of the device is required. An authentication operation often used, for instance, for unlocking a mobile electronic communication device, online baking or online payment is the entry of a usually 4-digit PIN (personal identification number), an eCode or TAN (transaction authentication number) by the user via a virtual PIN pad displayed on a display of the mobile electronic communication device.

### SUMMARY OF THE INVENTION

It is an object of the invention to provide an electronic device, in particular a mobile electronic communication device for performing a secure authentication operation based on a virtual PIN pad.

The foregoing and other objects are achieved by the subject matter of the independent claims. Further implementation forms are apparent from the dependent claims, the description and the figures.

According to a first aspect an electronic device for performing an authentication operation by a user on the basis of a virtual PIN pad is provided. The virtual PIN pad comprises a plurality of graphical symbols. In an embodiment, the plurality of graphical symbols includes a plurality of single numerical digits, in particular the digits 0 to 9. The electronic device may be a mobile electronic communication device, such as a smartphone, a tablet computer or the like.

The electronic device comprises a touch display configured to sequentially display a plurality of image frames, i.e. a video of image frames, including a first image frame and a second image frame. The first image frame, for each of the plurality of graphical symbols of the virtual PIN pad, comprises only a first portion of the respective graphical symbol of the virtual PIN pad, while the second image frame, for one or more of the plurality of graphical symbols of the virtual PIN pad, comprises only a second portion different to the first portion of the respective graphical symbol of the virtual PIN pad. The touch display is further configured to generate, in response to a touch operation of the touch display by the user, a touch detection signal. Moreover, the electronic device comprises a processing circuitry configured to associate the touch detection signal with one of the plurality of graphical symbols for performing the authentication operation.

Thus, an improved electronic device, in particular mobile electronic communication device for performing a secure authentication operation based on a virtual PIN pad is provided.

In a further embodiment, the plurality of image frames comprises a third image frame, wherein the third image frame, for one or more of the plurality of graphical symbols of the virtual PIN pad, comprises only the first portion of the respective graphical symbol of the virtual PIN pad. In other words, different frames of the plurality of frames, such as the first and the third image frame of the plurality of image frames may display the same portions of one or more of the plurality of graphical symbols.

In a further embodiment, the plurality of image frames comprises a fourth image frame, wherein the fourth image frame, for at least one of the plurality of graphical symbols of the virtual PIN pad, comprises only a portion of a graphical symbol of the plurality of graphical symbols of the virtual PIN pad different to the at least one of the plurality of graphical symbols of the virtual PIN pad. In other words, in an embodiment, some image frames, such as the fourth image frame, may be mixed into the plurality of image frames that at a respective position of the virtual PIN pad (different to the first, second and third image frames) do not contain portions of the respective graphical symbol associated with that position of the virtual PIN pad but a portion of a different graphical symbol associated with a different position of the virtual PIN pad. Advantageously, this allows increasing the noise for a potential attacker trying to obtain information about the authentication operation. On average the number of these "noise" image frames, such as the fourth image frame, should be smaller than the number of image frames identical or similar to the first, second and third image frame.

In a further embodiment, the plurality of image frames comprises a fifth image frame, wherein the fifth image frame, for at least one of the plurality of graphical symbols of the virtual PIN pad, comprises a portion of a random graphic symbol of a plurality of further graphical symbols. In other words, in an embodiment, some image frames, such as the fifth image frame, may be mixed into the plurality of image frames that at a respective position of the virtual PIN pad (different to the first, second and third image frames) do not contain portions of the respective graphical symbol associated with that position of the virtual PIN pad but a portion of a randomly chosen known or random further graphical symbol (different to the plurality of graphical symbols of the virtual PIN pad). The portion of a randomly chosen known or random further graphical symbol may be, for instance, a rotated portion of one of the plurality of graphical symbols of the virtual PIN pad. Advantageously, this allows increasing the noise for a potential attacker trying to obtain information about the authentication operation. On average the number of these "noise" image frames, such as the fifth image frame, should be smaller than the number of image frames identical or similar to the first, second and third image frame.

In a further embodiment, the electronic device further comprises a secure hardware and/or software module with a secure memory, wherein the secure memory is configured to store mapping information, in particular a table, and wherein the processing circuitry is configured to associate the position on the touch display with one of the plurality of graphical symbols on the basis of the mapping information stored in the secure memory.

In a further embodiment, the processing circuitry is part of the secure hardware and/or software module, i.e. provided by the hardware and/or software module and further configured to determine based on the touch detection signal a position on the touch screen and to associate the position on the touch display with one of the plurality of graphical symbols.

In a further embodiment, the processing circuitry is configured to execute an application, wherein the application comprises the authentication operation, i.e. the authentication operation is a part of the application and wherein the secure memory is configured to grant access to the mapping information to the application only.

In a further embodiment, for one or more of the plurality of graphical symbols of the virtual PIN pad, the respective graphical symbol of the virtual PIN pad is a combination of the first portion and the second portion of the respective graphical symbol of the virtual PIN pad. In other words, in an embodiment, the overlay of the first image frame and the second image frame completely shows at least some of the plurality of graphical symbols of the virtual PIN pad. In further embodiments, for one or more of the plurality of graphical symbols of the virtual PIN pad, the respective graphical symbol of the virtual PIN pad may be provided by a combination of more than two image frames of the plurality of image frames, such as by a combination of three or four image frames.

In a further embodiment, the processing circuitry is further configured to generate the plurality of image frames for each authentication operation. For instance, the image frames may be generated by a software, such as an online banking app, being executed by the electronic device.

In a further embodiment, the processing circuitry is further configured to determine for each authentication operation a respective position of the respective graphical symbol in all of the plurality of image frames, wherein the processing circuitry is configured to arrange, for each of the plurality of graphical symbols of the virtual PIN pad, the respective first portion and the respective second portion of the respective graphical symbol of the virtual PIN pad based on the respective position of the respective graphical symbol.

In a further embodiment, the processing circuitry is further configured to change, for each authentication operation, the respective position of the respective graphical symbol in the plurality of image frames. Thus, in other words, in an embodiment, the processing circuitry is configured to interchange or scramble the positions of the plurality of graphical symbols for a further authentication operation, i.e. to provide a scrambled virtual PIN pad.

In a further embodiment, the processing circuitry is further configured to change, for each authentication operation, a position and/or a size of the virtual PIN pad in the plurality of image frames for the respective authentication operation.

In a further embodiment, the electronic device further comprises a display buffer, wherein the processing circuitry is configured to store the plurality of image frames in the display buffer and wherein the touch display is configured to retrieve the plurality of image frames from the display buffer.

In a further embodiment, the processing circuitry is configured to determine, based on a plurality of touch operations by the user, a first sequence of one or more of the plurality of graphical symbols and to process the authentication operation based on the first sequence of the one or more of the plurality of graphical symbols and a pre-defined second sequence of one or more of the plurality of graphical symbols available to the processing circuitry. In an embodiment, the processing circuitry may be configured to process the authentication operation based on a comparison between the first sequence (or a hash value thereof) and the pre-defined second sequence (or a hash value thereof). If the first sequence (or the hash value thereof) and the second sequence (or the hash value thereof) are identical, the authentication operation is successful, i.e. can be further processed.

In a further embodiment, the processing circuitry is configured to determine, based on a plurality of touch operations by the user, a first sequence of one or more of the plurality of graphical symbols, wherein the electronic device further comprises a communication interface configured to transmit the first sequence of the one or more of the plurality of graphical symbols (or data derived therefrom, such as a hash value) in encrypted form to a remote authentication server for processing the authentication operation based on the first sequence of the one or more of the plurality of graphical symbols (or the data derived therefrom) and a pre-defined second sequence of one or more of the plurality of graphical symbols available to the processing circuitry. In an embodiment, the remote authentication server may be configured to process the authentication operation based on a comparison between the first sequence (or the data derived therefrom) and the pre-defined second sequence (or a hash value thereof). If the first sequence (or the data derived therefrom, such as a hash value) and the second sequence (or the hash value thereof) are identical, the remote authentication server may inform the electronic device that the authentication operation is successful, i.e. can be further processed.

In a further embodiment, the touch display of the electronic device is configured to sequentially display the plurality of images with a refresh rate of at least 24 image frames per second.

In a further embodiment, the touch display comprises a touch screen and an optical filter layer arranged on a top surface of the touch screen.

In a further embodiment, each respective graphical symbol of the plurality of graphical symbols comprises a plurality of pixels, wherein the first portion of the respective graphical symbol of the virtual PIN pad comprises a respective first subset of the plurality of pixels and the second portion of the respective graphical symbol of the virtual PIN pad comprises a respective second subset of the plurality of pixels different from the first subset of the plurality of pixels.

According to a second aspect a method for performing an authentication operation by a user with an electronic device on the basis of a virtual PIN pad is provided. The virtual PIN pad comprises a plurality of graphical symbols. In an embodiment, the plurality of graphical symbols includes a plurality of single numerical digits, in particular the digits 0 to 9.

The method comprises the steps of:
sequentially displaying by a touch display of the electronic device a plurality of image frames, including a first image frame and a second image frame, wherein the first image frame, for each of the plurality of graphical symbols of the virtual PIN pad, comprises only a respective first portion of the respective graphical symbol of the virtual PIN pad and wherein the second image frame, for one or more of the plurality of graphical symbols of the virtual PIN pad, comprises only a respective second portion different to the first portion of the respective graphical symbol of the virtual PIN pad;
generating, in response to a touch operation of the touch display by the user, a touch detection signal; and
associating the touch detection signal with one of the plurality of graphical symbols of the virtual PIN pad for performing the authentication operation.

The method according to the second aspect of the present invention can be performed by the electronic device according to the first aspect of the present invention. Thus, further features of the method according to the second aspect of the present invention result directly from the functionality of the electronic device according to the first aspect of the present inventions as well as its different embodiments described above and below.

According to a third aspect, a computer program product comprising a non-transitory computer-readable storage medium for storing program code which causes a computer or a processor to perform the method according to the second aspect, when the program code is executed by the computer or the processor, is provided.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating an electronic device according to an embodiment for performing a secure authentication procedure using a virtual PIN pad;
Figs. 2a, 2b show schematically a first and a second image frame of a plurality of image frames displayed on a touch display of an electronic device according to an embodiment for performing a secure authentication procedure using a virtual PIN pad;
Fig 2c shows schematically the visual impression of a user looking at the touch display of an electronic device according to an embodiment for performing a secure authentication procedure using a virtual PIN pad;
Fig. 3 shows a signaling diagram illustrating the process flow implemented by an electronic device according to an embodiment for performing a secure authentication procedure using a virtual PIN pad; and
Fig. 4 shows a flow diagram illustrating steps of a method for performing an authentication operation on the basis of a virtual PIN pad according to an embodiment.

In the figures, identical reference signs will be used for identical or at least functionally equivalent features.

### DETAILED DESCRIPTION OF EMBODIMENTS

In the following detailed description, reference is made to the accompanying drawings, which form part of the disclosure, and in which are shown, by way of illustration, specific aspects in which the present invention may be implemented. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

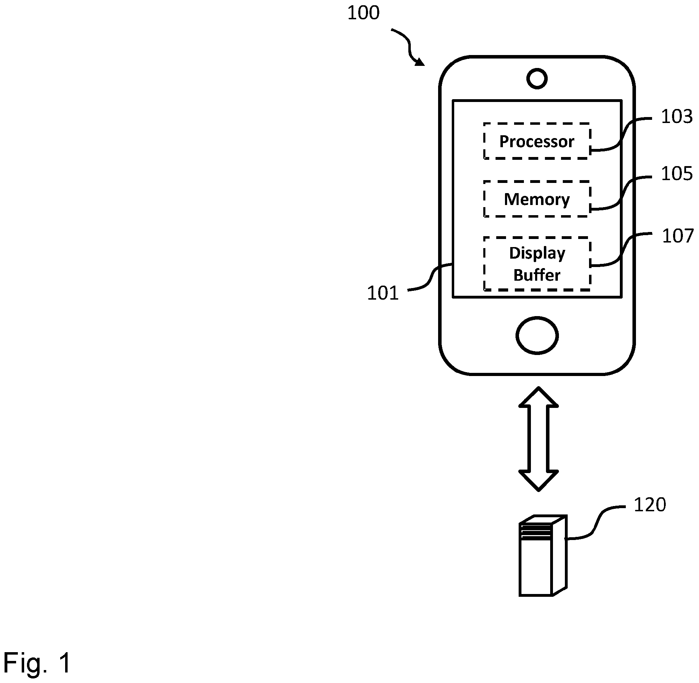

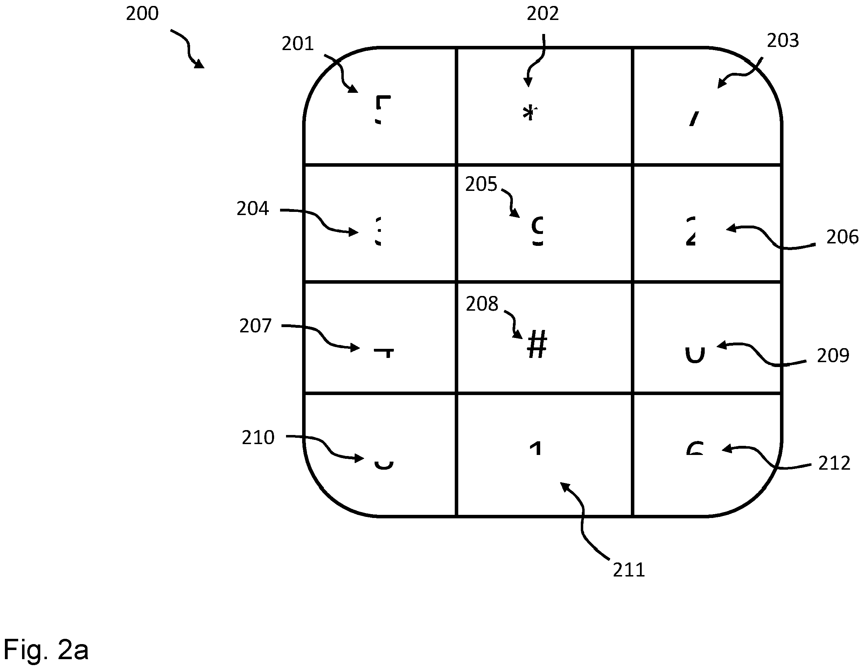

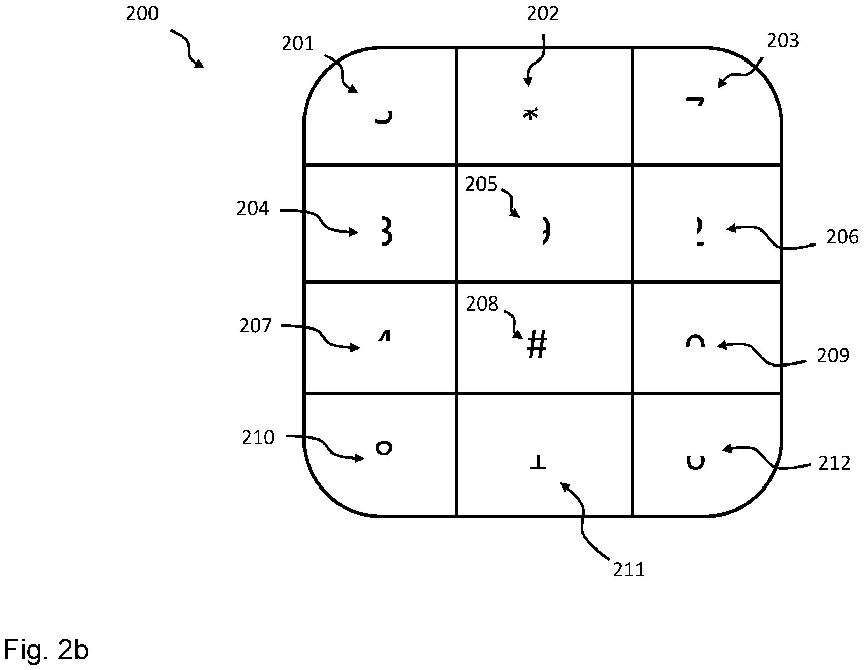

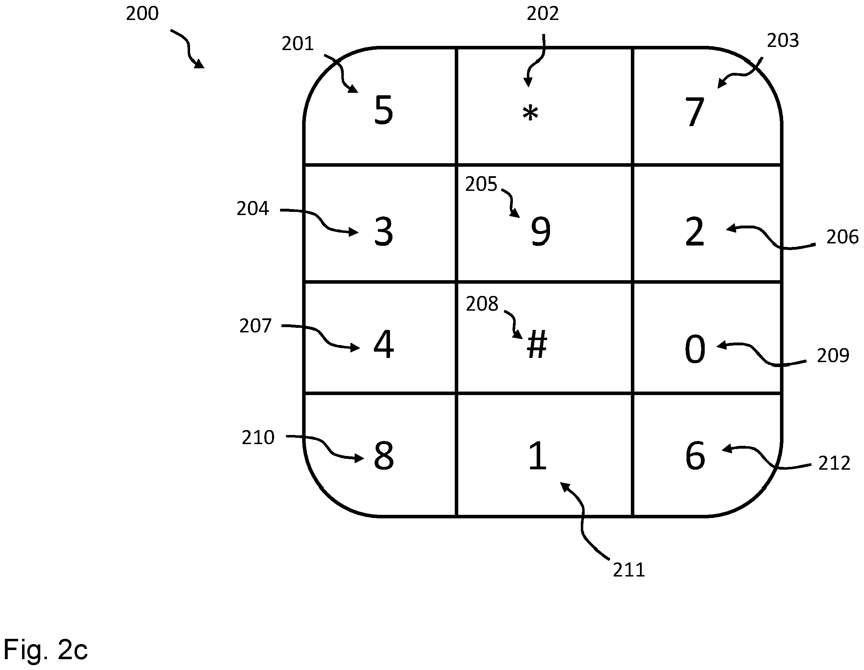

Figure 1 shows a schematic diagram illustrating an electronic device 100 according to an embodiment for performing a secure authentication operation using a virtual PIN pad 200 including a plurality of graphical symbols 201-212 (further illustrated in figures 2a, 2b and 2c). In the embodiment illustrated in figures 2a, 2b and 2c the plurality of graphical symbols 201-212 comprise the single numerical digits "0", "1", "2", "3", "4", "5", "6", "7", "8", "9" as well as the symbols "#" and "*". As will be appreciated, a PIN, TAN, eCode or similar kind of number may be defined by a sequence of the single numerical digits "0", "1", "2", "3", "4", "5", "6", "7", "8", "9".

In the embodiment shown in figure 1, the electronic device 100 is a mobile electronic communication device 100 in the form of a smartphone 100, which comprises a communication interface for communicating, for instance, via a wireless network with a remote authentication server 120.

As illustrated in figure 1, the mobile electronic communication device 100 comprises a touch display 101 for interacting with a user thereof, a processing circuitry or processor 103 for processing data and executing one or more software applications (i.e. APPs) for performing the operations described in more detail in the following, wherein the data and/or software applications are stored on a memory 105 of the electronic communication device 100. In an embodiment, the electronic communication device 100 may comprise a secure hardware and/or software module, such as a security enclave or a trusted executing environment, with the secure memory implemented as part of the secure hardware and/or software module. In an embodiment, at least part of the processing circuitry 103 may be implemented as a part of the secure hardware and/or software module as well.

The touch display 101 of the mobile electronic communication device 100 is configured to sequentially display a plurality of image frames, including a first image frame and a second image frame. Figure 2a shows schematically an exemplary first image frame of the plurality of image frames displayed on the touch display 101 of the mobile electronic communication device 100. As can be taken from figure 2a, the first image frame, for each of the plurality of graphical symbols 201-212 of the virtual PIN pad 200, comprises only a first portion of the respective graphical symbol 201-212 of the virtual PIN pad 200. For instance, for the graphical symbol "9" 205, the first image frame comprises, i.e. shows only a left portion thereof.

Figure 2b shows schematically an exemplary second image frame of the plurality of image frames displayed on the touch display 101 of the mobile electronic communication device 100. As can be taken from figure 2b, the second image frame, for one or more of the plurality of graphical symbols 201-212 of the virtual PIN pad 200, comprises only a second portion different to the first portion of the respective graphical symbol 201-212 of the virtual PIN pad 200. For instance, for the graphical symbol "9" 205, the second image frame comprises, i.e. shows only a right portion thereof.

In an embodiment, each respective graphical symbol of the plurality of graphical symbols 201-212 of the virtual PIN pad 200 comprises a plurality of pixels, wherein the first portion of the respective graphical symbol 201-212 of the virtual PIN pad 200 (shown by way of example in figure 2a) comprises a respective first subset of the plurality of pixels and the second portion of the respective graphical symbol 201-212 of the virtual PIN pad 200 (shown by way of example in figure 2b) comprises a respective second subset of the plurality of pixels different from the first subset of the plurality of pixels.

As will be appreciated, for the exemplary first and second image frames shown in figures 2a and 2b, the respective graphical symbol 201-212 of the virtual PIN pad 200 is a combination of the first portion and the second portion of the respective graphical symbol 201-212 of the virtual PIN pad. By displaying these images frames in sequence the touch display 101 of the electronic device 100 is configured to generate the visual impression to the user illustrated in figure 2c, i.e. a complete virtual PIN pad 200 comprising the plurality of graphical symbols 201-212. In an embodiment, the touch display 101 of the electronic device is further configured to sequentially display the plurality of image frames with a refresh rate of at least 24 image frames per second. In an embodiment, the processing circuitry 103 of the electronic device is configured to store the plurality of image frames in the display buffer 107, wherein the touch display 101 is configured to retrieve the plurality of image frames from the display buffer 107.

In an embodiment, the plurality of image frames displayed by the touch display 101 of the electronic device 100 may comprise further image frames that for one or more of the plurality of graphical symbols 201-212 of the virtual PIN pad 200, comprises a further portion of the respective graphical symbol 201-212 different to the first and second portion thereof.

In an embodiment, the plurality of image frames displayed by the touch display 101 of the electronic device 100 may comprise further image frames, such as a third image frame, wherein the third image frame, for one or more of the plurality of graphical symbols 201-212 of the virtual PIN pad 200, comprises, i.e. shows only the first portion of the respective graphical symbol 201-212 of the virtual PIN pad 200. In other words, further image frames of the plurality of image frames may be identical to the first image frame or the second image frame.

In an embodiment, the plurality of image frames may be generated by the processing circuitry 103 of the electronic device 101 for each authentication operation. In an embodiment, the processing circuitry 103 is configured to determine for a given authentication operation a respective position of the respective graphical symbol 201-212 in all of the plurality of image frames, wherein the processing circuitry 103 is configured to arrange, for each of the plurality of graphical symbols 201-212 of the virtual PIN pad 200, the respective first portion and the respective second portion of the respective graphical symbol 201-212 of the virtual PIN pad 200 based on the respective position of the respective graphical symbol 201-212 determined for the current authentication operation. In an embodiment, the processing circuitry 103 of the electronic device 100 is further configured to change, for a new authentication operation, the respective position of the respective graphical symbol 201-212 of the virtual PIN pad 200 in the plurality of image frames, i.e. to scramble the virtual PIN pad 200 for each new authentication operation. Additionally or alternatively, the processing circuitry 103 of the electronic device 100 may be further configured to change, for a new authentication operation, the position and/or the size of the virtual PIN pad 200 in the plurality of image frames for the new authentication operation. For instance, in an embodiment, the virtual PIN pad 200 for a first authentication operation might be located in the lower right portion of the plurality of images frames, while for a second authentication operation the virtual PIN pad 200 might be located in the upper left portion of the plurality of images frames. Moreover, for the second authentication operation the virtual PIN pad 200 may have twice the size as for the first authentication operation.

In a further embodiment, the plurality of image frames displayed by the touch display of the electronic device 100 comprises further image frames, such a fourth image frame, wherein the fourth image frame, for one or more of the plurality of graphical symbols 201-212 of the virtual PIN pad 200, comprises a fourth portion of a different graphical symbol of the plurality of graphical symbols 201-212 of the virtual PIN pad 200. For instance, in an embodiment, for the graphical symbol "9" 205, the fourth image frame may comprise, i.e. shows only a portion of a different graphical symbol, for instance, the graphical symbol "5" (at the location of the graphical symbol "9" 205). In a further embodiment, the plurality of image frames comprises a fifth image frame, wherein the fifth image frame, for at least one of the plurality of graphical symbols 201-212 of the virtual PIN pad 200, comprises a portion of a random graphic symbol of a plurality of further graphical symbols, such as randomly chosen portions of the letters "A" to "Z" or other known or random graphical symbols. In other words, in an embodiment, some image frames, such as the fifth image frame, may be mixed into the plurality of image frames that at a respective position of the virtual PIN pad 200 (different to the first, second and third image frames) do not contain portions of the respective graphical symbol 201-212 associated with that position of the virtual PIN pad 200 but a portion of a randomly chosen further known or random graphical symbol (different to the plurality of graphical symbols 201-212 of the virtual PIN pad 200). The portion of a randomly chosen further known or random graphical symbol may be, for instance, a rotated portion of one of the plurality of graphical symbols 201-212 of the virtual PIN pad 200. Advantageously, this allows increasing the noise for a potential attacker trying to obtain information about the authentication operation. On average the number of these "noise" image frames, such as the fourth image frame and/or the fifth image frame, should be smaller than the number of image frames identical or similar to the first, second and third image frame.

In response to the sequence of image frames displayed by the touch display 101 and the visual impression of the user illustrated in figure 2c, the user may select, i.e. enter one or more of the plurality of graphical symbols 201-212 of the virtual PIN pad 200 by touching the respective locations on the touch display 101. Thus, the touch display 101 of the electronic device 100 is further configured to generate, in response to such a touch operation of the touch display 101 by the user, a touch detection signal. The processing circuitry 103 of the electronic device 100, in turn, is configured to associate the touch detection signal provided by the touch display 101 with one of the plurality of graphical symbols 201-212 of the virtual PIN pad 200 for performing the authentication operation.

More specifically, in an embodiment, the processing circuitry 103 of the touch display 101 is further configured to determine based on the touch detection signal a position on the touch display 101 and to associate the position on the touch display 101 with one of the plurality of graphical symbols 201-212 of the virtual PIN pad 200. In an embodiment, the memory 105 of the electronic device 100 may be configured to store mapping information, in particular a table, wherein the processing circuitry 103 is configured to associate the position on the touch display 101 with a respective one of the plurality of graphical symbols 201-212 of the virtual PIN pad 200 on the basis of the mapping information stored in the memory 105. In an embodiment, the processing circuitry 103 is configured to execute a software application, i.e. an APP, wherein the application comprises the authentication operation and wherein the memory 105 is configured to grant access to the mapping information to the application only.

In an embodiment, the processing circuitry 103 of the electronic device 100 is configured to determine, based on a plurality of touch operations by the user, a first sequence of one or more of the plurality of graphical symbols 201-212 and to compare the first sequence of the one or more of the plurality of graphical symbols 201-212 (or a hash value thereof) with a pre-defined second sequence of one or more of the plurality of graphical symbols 201-212 (or a hash value thereof) available to the processing circuitry 103. In an embodiment, the pre-defined second sequence of one or more of the plurality of graphical symbols 201-212 or a digest or hash value thereof may be securely stored in the memory 105 of the electronic device.

In a further embodiment, the electronic device 100 is configured to transmit via its communication interface the first sequence of the one or more of the plurality of graphical symbols 201-212 (or data derived therefrom, such as a hash value) in encrypted form to the remote authentication server 120 for comparing the first sequence of the one or more of the plurality of graphical symbols 201-212 (or the data derived therefrom) with a pre-defined second sequence of one or more of the plurality of graphical symbols 201-212 available to the remote authentication server 120.

In a further embodiment, the touch display 101 of the electronic device comprises a touch screen and a optical filter, in particular a polarization filter layer arranged on a top surface of the touch screen. In an embodiment, the touch screen and the filter may be configured to display the plurality of image frames, including the first image frame and the second image frame. For instance, the filter may be controlled to show or hide the respective portions of the plurality of graphical symbols 201-212 of the virtual PIN pad 200.

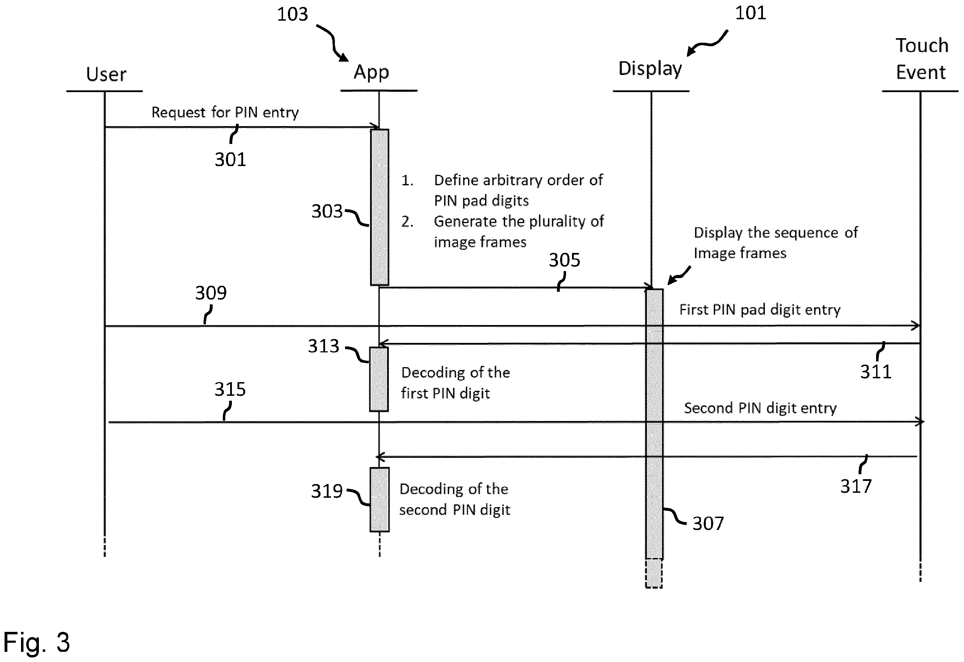

Figure 3 shows a signaling diagram illustrating the process flow implemented by the electronic device 100 according to an embodiment for performing a secure authentication operation using the virtual PIN pad 200. In figure 3 the following steps are illustrated, some of which already have been described in the context of figures 1 and 2a, 2b and 2c above.

In step 301 of figure 3, the user triggers an application executed by the processing circuitry 103 of the electronic device 100 to prompt a PIN entry by the user for performing a new authentication operation.

In step 303 of figure 3, the application executed by the processing circuitry 103 first determines for the new authentication operation the layout, i.e. the arrangement of the plurality of graphical symbols 201-212 within the virtual PIN pad 200 to be displayed to the user. On the basis thereof the application executed by the processing circuitry 103 then generates the plurality of image frames, including the first and second images frames as well as the further image frames described above (as illustrated, by way of example, in figures 2a and 2b).

In step 305 of figure 3, the application executed by the processing circuitry 103 provides the plurality of image frames to the display buffer 107 and, thereby, to the touch display 101.

In step 307 of figure 3, the touch display 101 displays the plurality of image frames to the user, which, as already described above, sees, for instance, the virtual PIN pad 200 illustrated in figure 2c.

In step 309 of figure 3, the user selects a first one of the of the plurality of graphical symbols 201-212 of the virtual PIN pad 200 by touching a corresponding location on the touch display 101.

In step 311 of figure 3, the touch display 101, in response to the touch operation by the user, generates a first touch detection signal and provides the first touch detection signal to the application executed by the processing circuitry 103.

In step 313 of figure 3, the application executed by the processing circuitry 103 decodes the first touch detection signal, i.e. associates the first touch detection signal with one of the plurality of graphical symbols 201-212 of the virtual PIN pad 200.

In step 315 of figure 3, the user selects a second one of the of the plurality of graphical symbols 201-212 of the virtual PIN pad 200 (which may be the same as the first one) by touching a corresponding location on the touch display 101.

In step 317 of figure 3, the touch display 101, in response to the further touch operation by the user, generates a second touch detection signal and provides the second touch detection signal to the application executed by the processing circuitry 103.

In step 319 of figure 3, the application executed by the processing circuitry 103 decodes the second touch detection signal, i.e. associates the second touch detection signal with one of the plurality of graphical symbols 201-212 of the virtual PIN pad 200.

Steps 315, 317 and 319 are repeated until the complete PIN sequence has been entered by the user for completing the authentication operation.

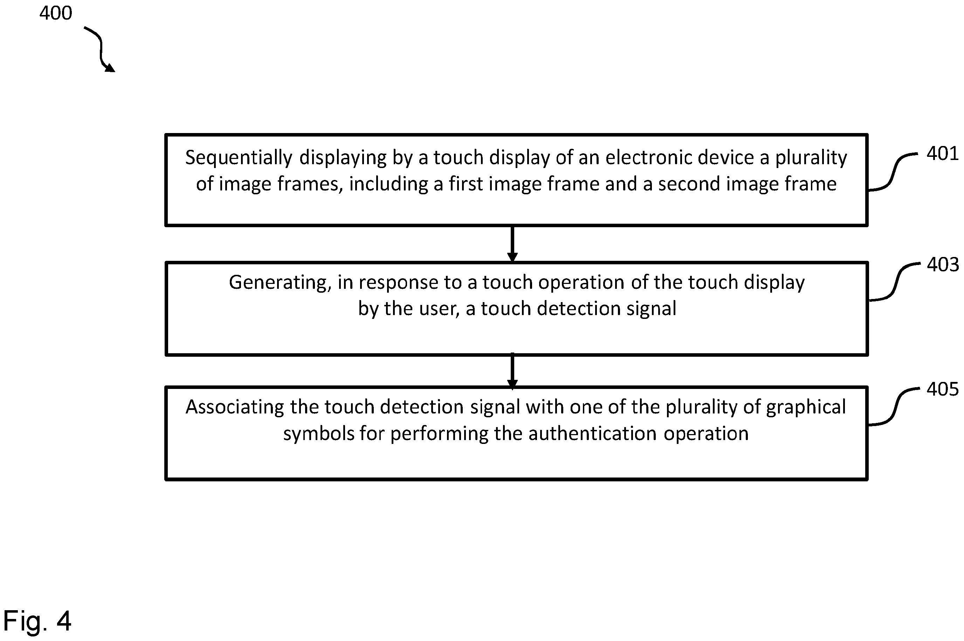

Figure 4 shows a flow diagram illustrating steps of a method 400 for performing an authentication operation with the electronic device 100 on the basis of the virtual PIN pad 200 according to an embodiment. The method 400 comprises the steps of:
sequentially displaying 401 by the touch display 101 of the electronic device 100 a plurality of image frames, including a first image frame and a second image frame, wherein the first image frame, for each of the plurality of graphical symbols 201-212 of the virtual PIN pad 200, comprises only a respective first portion of the respective graphical symbol 201-212 of the virtual PIN pad 200 and wherein the second image frame, for one or more of the plurality of graphical symbols 201-212 of the virtual PIN pad 200, comprises only a respective second portion different to the first portion of the respective graphical symbol 201-212 of the virtual PIN pad 200;
generating 403, in response to a touch operation of the touch display 101 by the user, a touch detection signal; and
associating 405 the touch detection signal with one of the plurality of graphical symbols 201-212 of the virtual PIN pad 200 for performing the authentication operation.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application.

As already mentioned, the method 400 can be performed by the electronic device 100. Thus, further features of the method 400 result directly from the functionality of the electronic device 100 as well as its different embodiments described above and below.

Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. An electronic device (100) for performing an authentication operation by a user on the basis of a virtual PIN pad (200), wherein the virtual PIN pad (200) comprises a plurality of graphical symbols (201-212), wherein the electronic device (100) comprises:
a touch display (101) configured to sequentially display a plurality of image frames, including a first image frame and a second image frame, wherein the first image frame, for each of the plurality of graphical symbols (201-212), comprises a first portion of the respective graphical symbol (201-212) and wherein the second image frame, for one or more of the plurality of graphical symbols (201-212), comprises a second portion of the respective graphical symbol (201-212), wherein the touch display (101) is further configured to generate, in response to a touch operation of the touch display (101) by the user, a touch detection signal; and
a processing circuitry (103) configured to associate the touch detection signal with one of the plurality of graphical symbols for performing the authentication operation.

2. The electronic device (100) of claim 1, wherein the plurality of image frames comprises a third image frame, wherein the third image frame, for one or more of the plurality of graphical symbols (201-212), comprises the first portion of the respective graphical symbol (201-212).

3. The electronic device (100) of claim 1 or 2, wherein the plurality of image frames comprises a fourth image frame, wherein the fourth image frame, for one or more of the plurality of graphical symbols (201-212), comprises a portion of a different graphical symbol of the plurality of graphical symbols.

4. The electronic device (100) of any one of the preceding claims, wherein the plurality of image frames comprises a fifth image frame, wherein the fifth image frame, for at least one of the plurality of graphical symbols (201-212) of the virtual PIN pad (200), comprises a portion of a random graphic symbol of a plurality of further graphical symbols.

5. The electronic device (100) of any one of the preceding claims, wherein the processing circuitry (103) is further configured to determine based on the touch detection signal a position on the touch screen (101) and to associate the position on the touch display (101) with one of the plurality of graphical symbols (201-212).

6. The electronic device (100) of claim 5, wherein the electronic device (100) further comprises a hardware and/or software secure module with a secure memory (105) and wherein the memory (105) is configured to store mapping information, in particular a table, and wherein the processing circuitry (103) is configured to associate the position on the touch display (101) with one of the plurality of graphical symbols (201-212) on the basis of the mapping information stored in the secure memory (105).

7. The electronic device (100) of claim 6, wherein the processing circuitry (103) is configured to execute an application, wherein the application comprises the authentication operation and wherein the secure memory (105) is configured to grant access to the mapping information to the application only.

8. The electronic device (100) of any one of the preceding claims, wherein, for one or more of the plurality of graphical symbols (201-212), the respective graphical symbol (201-212) is a combination of the first portion and the second portion of the respective graphical symbol (201-212).

9. The electronic device (100) of any one of the preceding claims, wherein the processing circuitry (101) is further configured to generate the plurality of image frames for each authentication operation.

10. The electronic device (100) of claim 9, wherein the processing circuitry (103) is further configured to determine for each authentication operation a respective position of the respective graphical symbol (201-212) in the plurality of image frames and wherein the processing circuitry (103) is configured to arrange, for each of the plurality of graphical symbols (201-212), the respective first portion and the respective second portion of the respective graphical symbol (201-212) based on the respective position of the respective graphical symbol (201-212).

11. The electronic device (100) of claim 10, wherein the processing circuitry (103) is further configured to change, for each authentication operation, the respective position of the respective graphical symbol (201-212) in the plurality of image frames.

12. The electronic device (100) of claim 9, wherein the processing circuitry (103) is further configured to change, for each authentication operation, a position and/or a size of the virtual PIN pad (200) in the plurality of image frames.

13. The electronic device (100) of any one of the preceding claims, wherein the electronic device (100) further comprises a display buffer (107), wherein the processing circuitry (103) is configured to store the plurality of image frames in the display buffer (107) and wherein the touch display (101) is configured to retrieve the plurality of image frames from the display buffer (107).

14. The electronic device (100) of any one of the preceding claims, wherein the processing circuitry (103) is configured to determine, based on a plurality of touch operations by the user, a first sequence of one or more of the plurality of graphical symbols (201-212) and to process the authentication operation based on the first sequence of the one or more of the plurality of graphical symbols (201-212) and a pre-defined second sequence of one or more of the plurality of graphical symbols (201-212).

15. The electronic device (100) of any one of the preceding claims, wherein the processing circuitry (103) is configured to determine, based on a plurality of touch operations by the user, a first sequence of one or more of the plurality of graphical symbols (201-212) and wherein the electronic device (100) further comprises a communication interface configured to transmit the first sequence of the one or more of the plurality of graphical symbols (201-212) or data derived therefrom in encrypted form to a remote authentication server (120) for processing the authentication operation based on the first sequence of the one or more of the plurality of graphical symbols (201-212) or data derived therefrom and a pre-defined second sequence of one or more of the plurality of graphical symbols (201-212) available to the remote authentication server (120).

16. The electronic device (100) of any one of the preceding claims, wherein the touch display (101) is configured to sequentially display the plurality of image frames with a refresh rate of at least 24 image frames per second.

17. The electronic device (100) of any one of the preceding claims, wherein the plurality of graphical symbols (201-212) comprise a plurality of numerical digits (201-212).

18. The electronic device (100) of any one of the preceding claims, wherein the touch display (101) comprises a touch screen and an optical filter layer arranged on a top surface of the touch screen.

19. The electronic device (100) of any one of the preceding claims, wherein each respective graphical symbol of the plurality of graphical symbols (201-212) comprises a plurality of pixels, wherein the first portion of the respective graphical symbol (201-212) comprises a respective first subset of the plurality of pixels and the second portion of the respective graphical symbol (201-212) comprises a respective second subset of the plurality of pixels.

20. A method (400) for performing an authentication operation by a user with an electronic device (100) on the basis of a virtual PIN pad (200), wherein the virtual PIN pad (200) comprises a plurality of graphical symbols (201-212), wherein the method (400) comprises:
sequentially displaying (401) by a touch display (101) of the electronic device (100) a plurality of image frames, including a first image frame and a second image frame, wherein the first image frame, for each of the plurality of graphical symbols (201-212), comprises a respective first portion of the respective graphical symbol (201-212) and wherein the second image frame, for one or more of the plurality of graphical symbols (201-212), comprises a respective second portion of the respective graphical symbol (201-212);
generating (403), in response to a touch operation of the touch display (101) by the user, a touch detection signal; and
associating (405) the touch detection signal with one of the plurality of graphical symbols (201-212) for performing the authentication operation.

21. A computer program product comprising a non-transitory computer-readable storage medium for storing program code which causes a computer or a processor to perform the method (400) of claim 20, when the program code is executed by the computer or the processor.
